# FASCICULE DE BREVET EUROPEEN

(11) **EP 1 170 999 B1**
(45) Date de publication et mention de la délivrance du brevet: **23.04.2003**
(21) Numéro de dépôt: 01907831.0
(22) Date de dépôt: 16.02.2001
(51) Int. Cl.: A22B 3/02

(54) **DISPOSITIF DE SECURITE POUR APPAREIL D'ABATTAGE**
SICHERHEITSEINRICHTUNG FÜR SCHLACHTVORRICHTUNG
SAFETY DEVICE FOR SLAUGHTERING APPARATUS

(30) Priorité: 18.02.2000 FR 0002028
(43) Date de publication de la demande: 16.01.2002
(73) Titulaire: Société Nouvelle des Etablissements Termet Solefi, 72470 Champagne (FR)
(72) Inventeur: LANDEL, Philippe, F-69004 Lyon (FR)
(74) Mandataire: Tanty, François
(86) Numéro de dépôt international: FR0100472
(87) Numéro de publication internationale: WO01060168

(56) Documents cités:
- FR-A- 2 306 637

## Description

La présente invention est relative à un nouveau dispositif de sécurité pour appareil d'abattage.

On connaît des appareils d'abattage d'animaux de boucherie qui sont constitués par des pistolets munis d'une broche propulsée par la force d'une cartouche pour pénétrer dans le crâne de l'animal et entraîner sa mort, voir e.g. le document FR-A-2306637.

L'invention se rapporte plus particulièrement aux appareils d'abattage du type dans lequel le canon, qui contient la broche et son piston, est susceptible d'être vissé et dévissé par rapport à la culasse qui comporte le dispositif de percussion, de manière à permettre, par exemple par basculement, la mise en place de la cartouche et l'extraction de la douille après utilisation.

Ces appareils connus présentent l'inconvénient qu'il arrive dans certains cas que le canon ne soit pas vissé complètement dans la culasse et qu'il en résulte une déformation de l'enveloppe de la cartouche dont l'extraction peut se révéler difficile.

La présente invention a pour objet un dispositif de sécurité pour ce type de pistolet d'abattage qui est caractérisé par le fait qu'il comporte un organe actif tel qu'une bille repoussée par un ressort qui contraint le canon à venir se placer en position de vissage complet dans la culasse. L'organe actif contraint le canon à venir se placer en position de vissage complet dans la culasse à partir d'une position où le canon et la culasse sont insuffisamment rapprochés l'un de l'autre pour que, si l'on agit sur la détente pour actionner le percuteur, la cartouche, puisse être mise à feu par ce dernier.

En d'autres termes, conformément à l'invention, le dispositif de sécurité crée en fin de vissage du canon dans la culasse une position instable d'où il résulte que, ou bien le canon n'est pas suffisamment vissé dans la culasse pour que la cartouche puisse être percutée, ou bien le canon vient en butée contre la culasse auquel cas la cartouche peut être percutée dans des conditions normales.

Selon un mode de réalisation préféré de l'invention, l'arête d'extrémité de la partie filetée du canon comporte une surface biseautée tronconique qui vient prendre appui sur une bille solidaire de la culasse, bille qui est repoussée radialement vers l'axe de l'appareil par un ressort tandis qu'à partir du moment où la cartouche solidaire du canon est sur le point de pouvoir être percutée, un évidement pratiqué dans ladite surface tronconique du canon provoque l'achèvement du mouvement de vissage du canon dans la culasse, de manière à assurer une fermeture correcte de la chambre à cartouche.

On va maintenant décrire l'invention en se référant à un mode de réalisation particulier donné à titre d'illustration et sans aucun caractère limitatif, représenté sur le dessin annexé.

Sur ce dessin,
- la figure 1 représente une vue d'ensemble en coupe partielle d'un appareil d'abattage du type auquel l'invention s'applique,
- la figure 2 est une vue en coupe à plus grande échelle de la chambre à cartouche et du dispositif de percussion d'un appareil d'abattage muni d'un mode de réalisation du dispositif de sécurité selon l'invention,
- la figure 3 est une vue en coupe du même appareil d'abattage dans une position où la cartouche ne peut pas être percutée, mais où le dispositif de sécurité selon l'invention n'est pas encore entré en action,
- la figure 4 est une vue en coupe correspondant à la figure 3 dans laquelle le dispositif de sécurité selon l'invention a permis d'amener le canon au contact de la culasse, de manière à assurer la sécurité du tir, et
- la figure 5 est une vue schématique axiale de l'arrière du canon représentant le dispositif avec la bille qui s'engage dans l'évidement de l'extrémité du canon.

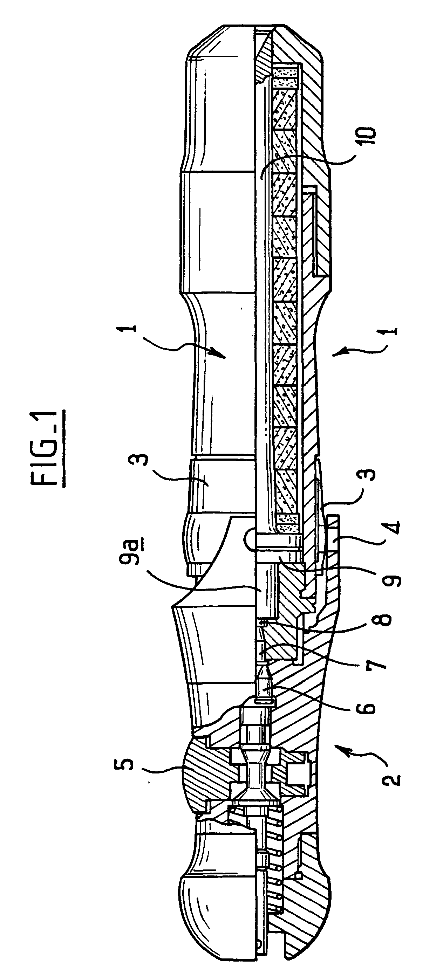

On a représenté sur la figure 1 un appareil d'abattage de type connu, comportant un canon 1 relié à une culasse 2 par une bague 3 susceptible de coulisser axialement par rapport au canon, bague par rapport à laquelle la culasse peut, en position d'ouverture, basculer autour d'un axe 4.

Un dispositif de percussion 5 vient, en position de tir, frapper un percuteur 6 qui assure la mise à feu de la cartouche 7, laquelle produit des gaz qui se développent dans la chambre 8 en propulsant le piston 9 solidaire à la broche 10 qui s'enfonce dans le crâne de l'animal, le piston étant muni d'une tête 9a qui obture la chambre 8.

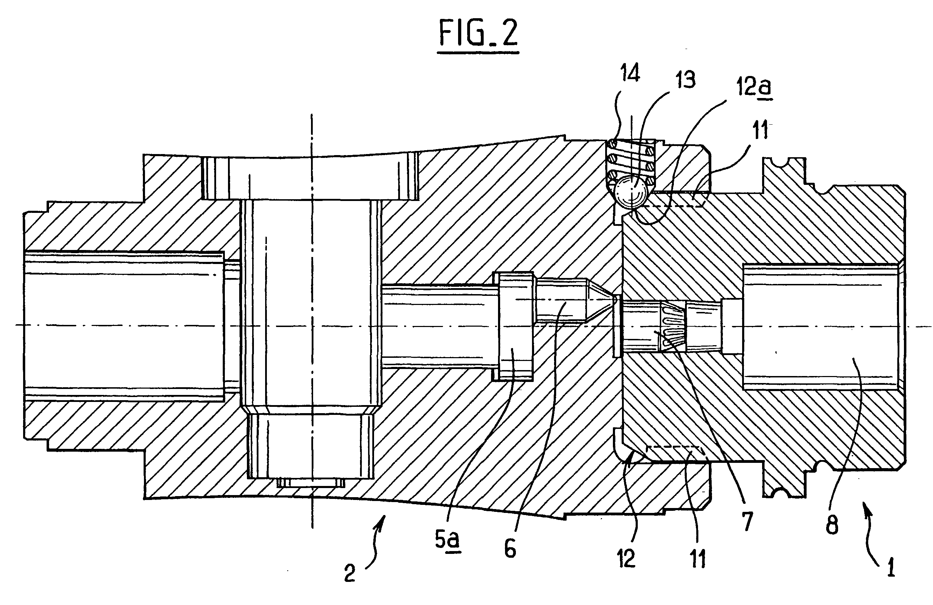

On retrouve sur la figure 2 la partie arrière du canon 1 qui, à la manière connue, se visse dans la culasse 2 par le filetage 11.

On retrouve également sur la figure 2 le marteau 5a du dispositif de percussion qui, en frappant sur le percuteur 6, permet de mettre à feu la cartouche 7 laquelle propulse le piston 9 et la broche 10 par les gaz qui se développent dans la chambre 8.

Dans le mode de réalisation décrit, l'arête de l'extrémité arrière du canon comporte un biseau tronconique 12.

Comme cela est connu, le filetage 11 qui réunit le canon à la culasse est à pas rapide, de sorte que l'on engage et on désengage le canon de la culasse par une rotation d'amplitude relativement faible.

Conformément à l'invention, une bille 13 placée dans un logement radial de la culasse est repoussée vers l'axe par un ressort 14 et lors de la fermeture de l'appareil vient prendre appui sur le biseau tronconique 12.

Lors du verrouillage progressif du canon sur la culasse, la cartouche 7 a déjà été engagée dans la chambre qui lui correspond à l'extrémité arrière du canon, à un moment où la culasse 2 avait été basculée latéralement autour de l'axe 4.

La culasse 2 est ensuite placée dans l'axe du canon dont l'extrémité s'engage par son filetage dans l'extrémité du filetage 11 de la culasse.

En vissant le canon dans la culasse, l'extrémité arrière du canon se rapproche axialement du dispositif de percussion et la surface tronconique 12 vient au contact de la bille 13 qu'elle repousse vers l'extérieur contre l'action du ressort 14.

Conformément à ce mode de réalisation de l'invention, le biseau tronconique 12 comporte un évidement 12a dans lequel la bille 13 commence à s'engager à un moment où la tête de la cartouche est encore hors d'atteinte du percuteur 8, de sorte que dans cette position la percussion ne peut avoir lieu.

Dès que la rotation, se poursuivant, la bille 13 parvient au niveau de l'évidemment 12a, le ressort 14 qui la repousse vers l'axe du dispositif exerce une force suffisante pour que le canon poursuive spontanément son mouvement de fermeture, jusqu'à ce que les faces correspondantes du canon et de la culasse viennent au contact l'une de l'autre en obturant ainsi correctement la chambre à cartouche, comme on le voit sur la figure 2.

On comprend que, grâce à l'invention, il se produit une position instable qui durant la fermeture de l'appareil fait en sorte que lors de la fin du vissage, ou bien le canon est suffisamment éloigné de la culasse pour que la percussion ne puisse avoir lieu, ou bien le canon vient au contact de la culasse et la percussion peut avoir lieu dans des conditions normales, ceci en raison de l'instabilité qui est créée entre ces deux positions conformément à l'invention.

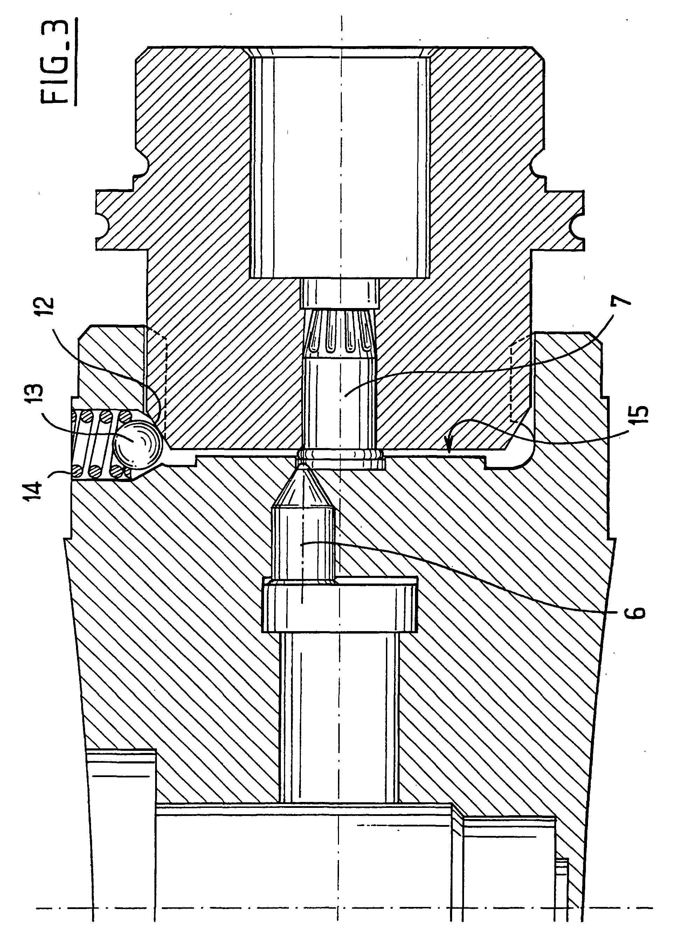

La figure 3 représente le dispositif au moment où la bille 13 n'est pas encore tombée dans l'évidement 12a pratiqué sur le biseau tronconique 12 de l'extrémité arrière du canon, le jeu 15 subsistant entre la face arrière du canon et la culasse étant suffisant pour que le percuteur 6 ne puisse pas atteindre la cartouche et produire la mise à feu.

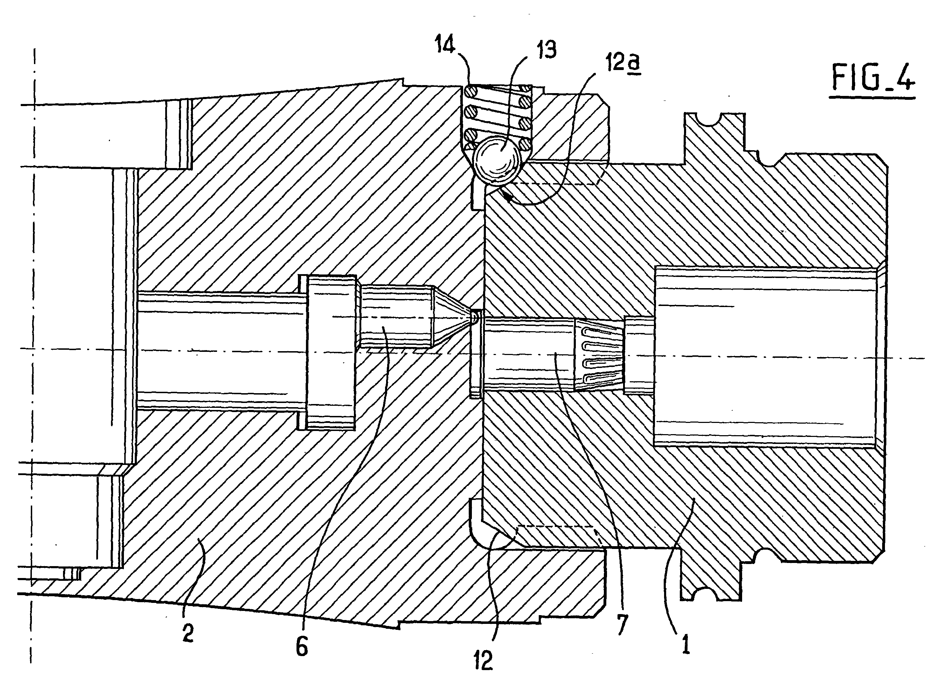

La figure 4 représente la position dans laquelle la bille 13 est engagée au fond de l'évidement 12a pratiqué dans la partie tronconique 12 du canon, ce qui amène l'extrémité arrière du canon 1 au contact de la culasse 2, assurant ainsi une obturation correcte de la chambre à cartouche et une mise à feu normale.

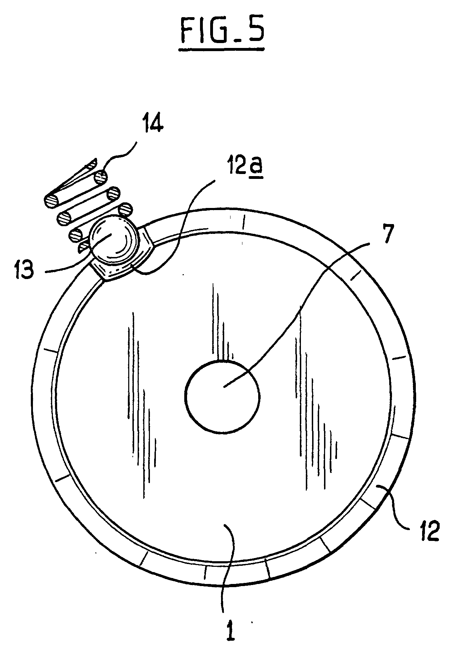

On a représenté sur la figure 5 une vue axiale schématique où l'on retrouve la cartouche 7 à l'intérieur de l'extrémité arrière du canon 1 dont la périphérie comporte le biseau tronconique 12 sur lequel les extrémités des filets à pas rapide qui solidarisent le canon et la culasse n'ont pas été représentées.

On voit également l'évidement 12a pratiqué dans le biseau 12 dans lequel tombe la bille 13 sous l'action du ressort 14 pour assurer la sécurité, conformément à l'invention.

On comprend que grâce à l'invention on peut obtenir d'une manière simple et économique une sécurité qui fait en sorte que la cartouche ne puisse pas être percutée lorsque la chambre à cartouche n'est pas totalement obturée par la mise en contact de l'extrémité arrière du canon avec la culasse.

Il est bien entendu que le mode de réalisation décrit n'a été donné qu'à titre d'illustration, et qu'il pourra recevoir toutes modifications désirables sans sortir pour cela du coeur de l'invention.

En particulier, on comprend que le dispositif de bille et de ressort qui coopère avec l'évidement est un des moyens qui permet la création d'une zone instable telle que la cartouche ne peut être percutée avant la fermeture complète du canon et de la culasse.

Il est clair qu'un tel dispositif peut agir sur un évidement placé à un autre endroit du canon et qu'il n'est pas impératif qu'il soit situé sur le biseau tronconique situé à l'extrémité du canon.

On comprend également que la bille qui a été décrite peut être remplacée par un autre organe élastique remplissant la même fonction.

## Revendications

1. Appareil d'abattage d'animaux de boucherie du type comportant une broche solidaire d'un piston coulissant dans un canon en étant propulsée par la force d'une cartouche, une culasse susceptible d'être vissée sur le canon de manière à obturer la chambre à cartouche et à permettre en position fermée la percussion de cette dernière, **caractérisé par le fait qu'**il comporte un organe actif (12 ; 13 ; 14) qui contraint le canon (1) à venir se placer dans une position de vissage complet de la culasse (2).

2. Appareil selon la revendication 1, **caractérisé par le fait que** l'organe actif contraint le canon à venir se placer dans une position de vissage complet de la culasse à partir d'une position où le canon et la culasse sont insuffisamment rapprochés l'un de l'autre pour que, si l'on agit sur la détente pour actionner le percuteur (6), la cartouche (7) puisse être mise à feu par ce dernier.

3. Appareil selon la revendication 1 ou 2 **caractérisé par le fait que** l'organe actif est constitué par une bille (13) déplacée par un ressort (14).

4. Appareil selon la revendication 3, **caractérisé par le fait que** la bille (13) coopère avec une surface tronconique (12) disposée à la partie arrière du canon et comportant un évidement (12a) dans lequel le ressort (14) repousse la bille (13) à un moment où le canon (1) est trop éloigné de la culasse (2) pour pouvoir provoquer la percussion et qui par poursuite du vissage amène le canon en contact avec la culasse dans une position qui obture complètement la chambre à cartouche.

## Claims

1. Animal slaughter device comprising a shaft attached to a ram which slides in a barrel and is propelled by the force of a cartridge, a breech able to be screwed to the barrel so as to seal the cartridge chamber and allow its priming when in the closed position, **characterised in that** the device comprises an active element (12; 13; 14) which forces the barrel (1) to move into a fully screwed position of the breech (2).

2. Device according to claim 1, **characterised in that** the active element forces the barrel to move into a fully screwed position of the breech from a position where the barrel and the breech are insufficiently close to each other for the cartridge (7) to be able to be fired by the striking pin (6) when the trigger is pressed to activate said striking pin.

3. Device according to claim 1 or 2, **characterised in that** the active element consists of a ball (13) moved by a spring (14).

4. Device according to claim 3, **characterised in that** the ball (13) co-operates with a frustoconical surface (12) arranged on the rear part of the barrel and comprising a recess (12a) into which the spring (14) pushes the ball (13) at a moment when the barrel (1) is too far from the breech (2) to be able to cause priming and which, continuing the screwing, brings the barrel into contact with the breech in a position which completely seals the cartridge chamber.

## Patentansprüche

1. Tierschlachtvorrichtung mit einem an einem Kolben befestigten Bolzen, der bei seinem durch die Kraft einer Patrone bewirkten Vortrieb in einem Rohr läuft, und einem Bodenstück, das mit dem Rohr derart verschraubbar ist, daß es eine Patronenkammer verschließt und im geschlossenen Zustand Zündung der Patrone gestattet, **gekennzeichnet durch** ein Funktionselement (12, 13, 14), das das Rohr (1) in eine mit dem Bodenstück (2) vollständig verschraubte Stellung drängt.

2. Vorrichtung nach Anspruch 1, **dadurch gekennzeichnet, daß** das Funktionselement das Rohr in die mit dem Bodenstück vollständig verschraubte Stellung von einer Stellung aus drängt, in der das Rohr und das Bodenstück einander nicht nahe genug sind, um bei Betätigung des Abzugs zur Beaufschlagung eines Schlagbolzens (6) die Patrone (7) durch diesen zu zünden.

3. Vorrichtung nach Anspruch 1 oder 2, **dadurch gekennzeichnet, daß** das Funktionselement von einer durch eine Feder (14) beaufschlagten Kugel (13) gebildet ist.

4. Vorrichtung nach Anspruch 3, **dadurch gekennzeichnet, daß** die Kugel (13) mit einer Kegelstumpffläche (12) zusammenarbeitet, die am hinteren Teil des Rohrs vorgesehen ist und eine Ausnehmung (12a) aufweist, in die die Feder (14) die Kugel (13) in einem Moment drückt, in dem das Rohr (1) von dem Bodenstück (2) zu weit entfernt ist, um die Zündung auszulösen, und die im Zuge der Verschraubung das Rohr in Berührung mit dem Bodenstück in einer Stellung bringt, in der die Patronenkammer vollständig geschlossen ist.
